# EUROPEAN PATENT APPLICATION

(11) **EP 4 145 572 A1**
(43) Date of publication of application: **08.03.2023**
(21) Application number: 22188531.2
(22) Date of filing: 03.08.2022
(51) Int. Cl.: H01M 8/021, H01M 8/0217, H01M 8/0228, H01M 8/12

(54) **PROTECTIVE-LAYER-COATED-INTERCONNECTOR, CELL STACK INCLUDING THIS PROTECTIVE-LAYER-COATED-INTERCONNECTOR, AND HYDROGEN ENERGY SYSTEM INCLUDING THE SAME**

(30) Priority: 06.09.2021 JP 2021144997
(71) Applicant: Toshiba Energy Systems & Solutions Corporation, Saiwai-ku Kawasaki-shi Kanagawa 2120013 (JP)
(72) Inventor: Kobayashi, Shohei, Kawasaki-shi, Kanagawa, 212-0013 (JP); Imai, Kiyoshi, Kawasaki-shi, Kanagawa, 212-0013 (JP); Kameda, Tsuneji, Kawasaki-shi, Kanagawa, 212-0013 (JP); Asayama, Masahiro, Kawasaki-shi, Kanagawa, 212-0013 (JP); Yoshino, Masato, Kawasaki-shi, Kanagawa, 212-0013 (JP); Osada, Norikazu, Kawasaki-shi, Kanagawa, 212-0013 (JP); Inuzuka, Riko, Kawasaki-shi, Kanagawa, 212-0013 (JP)
(74) Representative: Hoffmann Eitle

(57) **Abstract**

[Problem] Provided are a protective-layer-coated-interconnector, a cell stack, and a hydrogen energy system. A component (particularly Cr) of the interconnector is prevented from diffusing even if the interconnector is exposed to high temperature for a long time. The interconnector has sufficient diffusion barrier performance and protective performance even with a protective layer thinner than conventionally, is inhibited from being degraded through use, and has excellent electrical conductivity.

[Solution] A protective-layer-coated-interconnector including an interconnector material and a protective layer on the surface of the interconnector material, wherein the protective layer contains a metal layer constituted by a Group 11 element. A cell stack and a hydrogen energy system that each include this interconnector.

## Description

### FIELD

Embodiments of the present invention relate to a protective-layer-coated-interconnector, a cell stack including this protective-layer-coated-interconnector, and a hydrogen energy system including the same.

### BACKGROUND

Hydrogen can be mentioned as one of the new energy sources. As an example of such utilization of hydrogen as an energy source, that which is attracting attention is a fuel cell, which enables hydrogen to react with oxygen electrochemically to convert the chemical energy to electrical energy.

Fuel cells have high energy utilization efficiency, and thus, are being actively developed as large-scale distributed power supplies, household power supplies, and transportation power supplies.

In general, fuel cells are classified according to the temperature range and the kinds of a material and fuel that are to be used. According to the electrolyte material to be used, fuel cells are classified into the polymer type, phosphoric acid type, molten carbonate type, and solid oxide. Among these, a solid oxide fuel cell (SOFC), which uses a solid oxide electrolyte, is attracting attention from an efficiency viewpoint.

However, hydrogen does not exist in nature, and this fact makes it desired to transport hydrogen into a hydrogen system containing a fuel cell. An electrochemical cell can cause a water electrolysis reaction, which is a reverse reaction of the fuel cell reaction, and thus, can produce hydrogen in a hydrogen system.

Examples of the hydrogen-production reaction include the following three types: an alkali water electrolysis type, polymer type, and solid oxide type. Among these, a solid oxide type is considered to have the highest hydrogen-production efficiency. A solid oxide electrochemical cell can highly efficiently cause either of the electrochemical reactions: fuel cell reaction or water electrolysis, and thus, is attracting attention.

Furthermore, a solid oxide electrochemical cell can have a large capacity in the form of a stack of cells stacked via an interconnector for a solid oxide electrochemical cell. In general, an interconnector for a solid oxide electrochemical cell involves high-temperature resistance, and thus, a base material to be used is often a stainless alloy having a high chromium content. In some cases, such an alloy causes an oxide-coated layer composed mainly of Cr₂O₃ to be formed on the surface at high temperature. Cr₂O₃ has a large electrical resistance, and thus, causes a decrease in the electrical conductivity of the interconnector, thus making it difficult to avoid an increase in the resistance of the solid oxide electrochemical cell stack. Additionally, if the Cr component in the Cr₂O₃-coated layer is gasified and sticks to the electrode portion of the solid oxide electrochemical cell, the performance of the solid oxide electrochemical cell is caused to decrease.

One of the countermeasures for inhibiting these problems is, for example, to inhibit the Cr diffusion by providing a protective layer on the surface of an interconnector for a solid oxide electrochemical cell. On the other hand, the electrical resistance of this protective layer causes an ohmic loss and thus decreases the energy efficiency. Hence, measures for decreasing the electrical resistance of the protective layer are widely under study.

### SUMMARY OF THE INVENTION

### Technical Problem

In cases where an interconnector for a solid oxide electrochemical cell has a protective layer produced thereon, a material having high electrical conductivity is used as the protective layer. For example, perovskite type oxides (the chemical formula: ABO₃) and spinel type oxides (AB₂O₄) exhibit high electrical conductivity at an operating temperature, and are materials widely under study. However, in such a case where an interconnector for a solid oxide electrochemical cell has a protective layer produced thereon, Cr contained in the interconnector for a solid oxide electrochemical cell diffuses into the protective layer, whereby part of the metal elements constituting the protective layer are substituted with Cr, form Cr₂O₃ between the interconnector for a solid oxide electrochemical cell and the protective layer, and thus increase the electrical resistance. This poses a problem.

To solve this problem, the present invention proposes having a structure in which a Cr diffusion barrier layer is introduced between the interconnector for a solid oxide electrochemical cell and the protective layer to decrease the Cr diffusion velocity.

Examples of functions desired for such a protective layer include Cr diffusing inhibition, electrical conductivity, and adhesion. Cr contained in an interconnector material is diffused up to the surface through a protective layer if exposed to high temperature for a long time. Accordingly, to increase the durability of the solid oxide electrochemical cell stack, the layer thickness of the protective layer is increased so that the distance from the interconnector up to the surface of the protective layer can be increased, but as a result, the electrical resistance of the protective layer is increased, leading to causing a decrease in the reaction efficiency of the solid oxide electrochemical cell.

To minimize the layer thickness of the protective layer for the purpose of decreasing the electrical resistance, it is important to slow the diffusion velocity of Cr in the protective layer. The present inventors have found the formation control of the protective layer to be noteworthy as one method for the slowing, and have studied such formation control in detail.

To solve these problems, an embodiment of the present invention proposes providing an interconnector having a protective layer having a Cr diffusion barrier layer.

### Solution to Problem

A protective-layer-coated-interconnector according to an embodiment of the present invention is characterized by being an interconnector including an interconnector material and a protective layer on the surface of the interconnector material, wherein the protective layer contains a metal layer constituted by a Group 11 element.

Specific preferable examples of a
protective-layer-coated-interconnector according to an embodiment of the present invention encompass a
protective-layer-coated-interconnector in which the protective layer contains a metal layer constituted by a Group 11 element and an oxide layer constituted by an oxide of a metal other than a Group 11 element, and the oxide layer is disposed on the external side.

Specific preferable examples of a
protective-layer-coated-interconnector according to an embodiment of the present invention encompass a
protective-layer-coated-interconnector in which the oxide layer contains at least one element selected from the group consisting of Mn, Fe, Co, Ni, Cu, Ce, and Zn.

Specific preferable examples of a
protective-layer-coated-interconnector according to an embodiment of the present invention encompass a
protective-layer-coated-interconnector in which the metal layer constituted by a Group 11 element has a layer thickness of 0.1 µm to 100 µm.

Specific preferable examples of a
protective-layer-coated-interconnector according to an embodiment of the present invention encompass a
protective-layer-coated-interconnector in which the oxide layer has a layer thickness of 0.1 µm to 100 µm.

In addition, a cell stack according to an embodiment of the present invention is characterized by including a structural unit in which a solid oxide electrochemical cell containing a fuel electrode, an electrolyte layer, and an air electrode is sandwiched between the protective-layer-coated-interconnectors.

A hydrogen energy system according to an embodiment of the present invention is characterized by including the cell stack.

### Advantageous Effects of Invention

For example, if a protective-layer-coated-interconnector according to an embodiment of the present invention is exposed to high temperature for a long time, a component (particularly Cr) of the interconnector is prevented from diffusing. Even if thinner than conventionally, the protective layer in particular has sufficient diffusion barrier performance and protective performance, and is effectively inhibited from being degraded through use. Accordingly, provided is an interconnector maintaining a high degree of diffusion barrier performance and protective performance and also having other enhanced characteristics such as electrical conductivity.

A protective-layer-coated-interconnector according to an embodiment of the present invention prevents the performance of the interconnector itself from being degraded by a diffused component, and prevents adverse influence (for example, the contamination, performance degradation, or the like of another constituent member or the like) due to a diffused component. As above-mentioned, other characteristics such as electrical conductivity are also enhanced, thus making it possible to provide a cell stack and a hydrogen energy system that each have higher performance and higher durability.

### BRIEF DESCRIPTION OF THE DRAWINGS

FIG. 1 is a view depicting the constitution of a protective-layer-coated-interconnector according to an embodiment of the present invention.
FIG. 2 include views each depicting a cross-sectional structure (extract) of a cell stack according to an embodiment of the present invention.
FIG. 3 is a graph illustrating the electrical-resistance decreasing effect of a protective-layer-coated-interconnector according to an embodiment of the present invention.
FIG. 4 is a graph that represents an SEM-EDS analysis result of a cross-section of a protective-layer-coated-interconnector according to an embodiment of the present invention, and illustrates the Cr-diffusion inhibiting effect.

### DETAILED DESCRIPTION OF THE EMBODIMENTS

### < Protective-layer-coated-interconnector>

Below, a protective-layer-coated-interconnectors according to the present invention will be described, but the present invention is not limited to the below-mentioned embodiments or Examples. In addition, the schematic views referenced in the below-mentioned description are drawings depicting the positional relationship among the constituents, and, for example, the thickness ratios among the layers in the drawings do not necessarily conform to those among the actual layers.

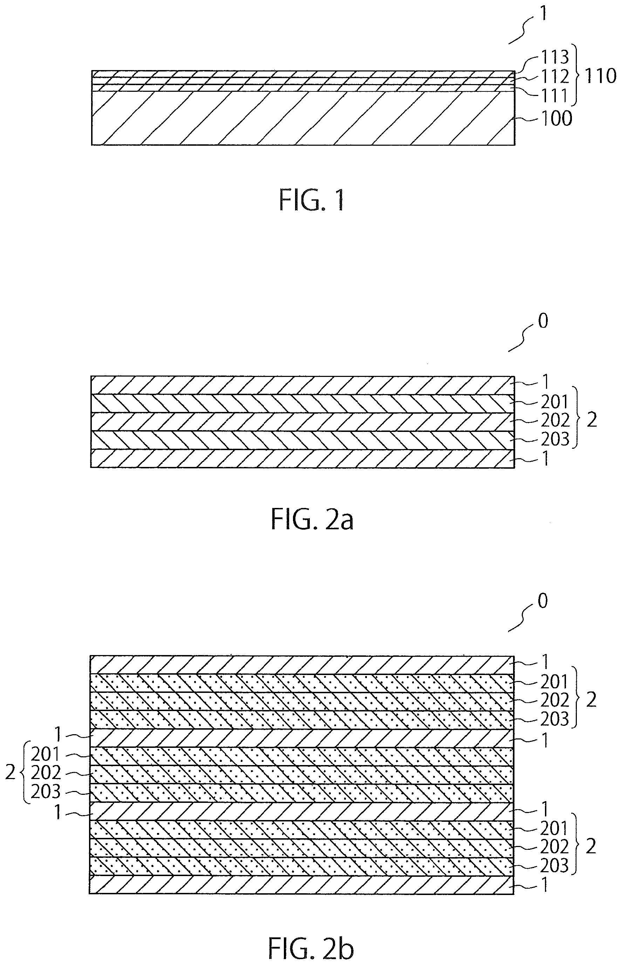

FIG. 1 is a schematic view depicting a cross-sectional structure of part of a protective-layer-coated-interconnector 1 according to an embodiment of the present invention.

The protective-layer-coated-interconnector 1 depicted in FIG. 1 is an interconnector including an interconnector material 100 and a protective layer 110 on the surface of the interconnector material, and the protective layer 110 contains a metal layer constituted by a Group 11 element.

Here, for the interconnector material 100, an interconnector material that has been used conventionally for a fuel cell, particularly a solid oxide fuel cell, can be used also in the present invention. For example, an interconnector material composed of an Fe-Cr-based alloy can be used. Such a Cr-based alloy preferably contains Cr in an amount of 12 weight% or more, particularly 18 weight% or more. In this regard, the Fe-Cr-based alloy can contain a small amount, for example, 1.0 weight% or less of a rare earth element or a Zr element.

The interconnector material 100 is preferably composed of a material the thermal expansion coefficient of which is closer to that of a solid oxide electrochemical cell, such as a ferrite-based stainless steel. One face or each of both faces of the interconnector material 100 may be coated with the protective layer 110.

In general, the Cr element reacts with oxygen or water vapor in the operating temperature range of a solid oxide electrochemical cell to vaporize, becoming a factor for decreasing the performance of the solid oxide electrochemical cell. To inhibit this in the present invention, the interconnector material 100 containing Cr is coated with the protective layer 110 so that the Cr element will not be allowed to reach the surface of the protective layer 110.

In an embodiment of the present invention, the protective layer functions as a barrier layer to inhibit Cr diffusion, thus making it possible to enhance the Cr-diffusion inhibiting effect.

Because of this, the protective layer 110 of the protective-layer-coated-interconnector 1 according to an embodiment of the present invention contains at least one metal layer constituted by a Group 11 element.

### <<Metal layer constituted by Group 11 element>>

A Group 11 element refers to any one of Cu, Ag, Au, and Rg. These are noble metals that are less prone to oxidation, and are characterized in that Cr has a very low solubility in the metal. Here, in comparison between a Group 11 element and Cr on the basis of a standard oxidation-reduction potential that represents proneness to oxidation, the standard oxidation-reduction potential at which Cr³⁺ becomes metal is -0.74 V vs SHE, and the standard oxidation-reduction potential at which Cu²⁺ becomes metal is +0.34 V vs SHE. This demonstrates that Cr is more prone to be oxidized than Cu. Comparison of the standard oxidation-reduction potential between Cu and the other Group 11 elements demonstrates that Cu is a metal that is the most prone to be oxidized, and that the other Group 11 element are elements that are similarly less prone to be oxidized than Cr.

These Group 11 elements exist in a metallic state in an operating environment, and thus, achieve a low electrical resistance. In addition, these Group 11 element metals are characterized in that Cr has a low solubility in the metals. For example, according to Hansen's phase diagram, the solubility of Cr in a Cu phase exhibits approximately 0.15 mass% at 800°C. This demonstrates that Cr hardly dissolves in Cu, and has a large effect in the form of a Cr diffusion barrier layer.

The metal layer of a Group 11 element may be partially oxide, and oxygen may be dissolved in the metal layer. In addition, the metal layer of a Group 11 element may be constituted by a metal of a Group 11 element alone, or may be constituted by an alloy including a Group 11 element.

Examples of methods of producing a metal layer of a Group 11 element include: physical vapor deposition methods such as vacuum deposition and ion plating; chemical vapor deposition methods such as sputtering and pulsed laser deposition; a cold spray method; a thermal spraying method; an electrodeposition method; an electroless plating method; a rolling method; a spin coating method; a dip coating method; a sol-gel method; a doctor blade method; a screen printing method; an aerosol method; and the like.

The metal layer of a Group 11 element can be formed out of metal itself, or the metal layer can be produced by forming an oxide layer and then reducing the oxide layer. In addition, the metal layer can be formed by forming a layer containing a solvent and then allowing the solvent to volatilize and/or react at a temperature, in a gas atmosphere, and/or in like manner. In addition, in the case where the metal layer is produced by forming an oxide layer and then reducing the oxide layer, or in the case where the metal layer is produced by forming a layer containing a solvent and then allowing the solvent to volatilize and/or react at a temperature, in a gas atmosphere, and/or in like manner, the process of producing the metal layer can be performed using a protective-layer-coated-interconnector alone, or can be preceded by incorporating a
protective-layer-coated-interconnector into a cell stack or a module.

A protective-layer-coated-interconnector 1 according to an embodiment of the present invention includes an interconnector material 100 and a protective layer 110 with which the surface of the interconnector material 100 is coated. The protective layer 110 may be constituted by a plurality of layers. In FIG. 1, the first protective layer 111, the second protective layer 112, and the third protective layer 113 are closer in this order to the interconnector material.

In general, the Cr element reacts with oxygen or water vapor in the operating temperature range of a solid oxide electrochemical cell to vaporize, becoming a factor for decreasing the performance of the solid oxide electrochemical cell. To inhibit this, it is desired that the interconnector material 100 containing Cr is coated with the protective layer 110 so that the Cr element will not be allowed to reach the surface of the protective layer 110. Out of the plurality of layers (three layers in FIG. 1) constituting the protective layer 110, one or more protective layers function as a barrier layer to inhibit Cr diffusion, thus making it possible to enhance the Cr-diffusion inhibiting effect.

The metal layer of a Group 11 element may be the first protective layer 111 with which the surface of the interconnector material 100 is coated, or may be the second protective layer 112.

### <<Oxide layer>>

The oxide constituting the oxide layer desirably exhibits a low electrical resistance at 600 to 1000°C. Specific and particularly preferable examples of such an oxide include oxides having such a crystal structure as in a spinel type oxide (AB₂O₄), perovskite type oxide (ABO₃), or Ruddelsden-Popper type oxide (ABO₃)ₙ·AO.

In cases where the oxide used is a spinel type oxide, the composition of the oxide layer preferably contains the following: an oxide containing Co₃O₄ and one or more selected from the group consisting of Mn, Fe, Ni, Cu, Ce, and Zn; an oxide containing Zn₃O₄ and a dopant that is one or more elements selected from the group consisting of Fe, Mn, and Cu; or the like.

In cases where the oxide used is a perovskite type oxide or a Ruddelsden-Popper type oxide, the composition of the oxide layer is preferably (La,Sr)CoO₃, (La,Sr)(Co,Fe)O₃, (La,Sr)MnO₃, LaNiO₄, Ba(CeY)O₃, (BaZr)(CeY)O₃, or the like.

Preferable examples of methods of producing an oxide layer include: physical vapor deposition methods such as kahn vacuum deposition and ion plating; chemical vapor deposition methods such as sputtering and pulsed laser deposition; a cold spray method; a thermal spraying method; an electrodeposition method; an electroless plating method; a rolling method; a spin coating method; a dip coating method; a sol-gel method; a doctor blade method; a screen printing method; an aerosol method; and the like. The oxide layer may be formed out of an oxide itself, or the oxide layer can be produced by forming a metal layer and then oxidizing the metal layer, or the oxide layer can be produced by forming a layer containing a solvent and then allowing the solvent to volatilize and/or react at a temperature, in a gas atmosphere, and/or in like manner. In addition, in the case where the metal layer is produced by forming a metal layer and then oxidizing the metal layer, or in the case where the oxide layer is produced by forming a layer containing a solvent and then allowing the solvent to volatilize and/or react at a temperature, in a gas atmosphere, and/or in like manner, the process of producing the oxide layer may be performed using a protective-layer-coated-interconnector alone, or can be preceded by incorporating a
protective-layer-coated-interconnector into a cell stack or a module.

In cases where the protective layer contains a metal layer constituted by a Group 11 element and contains an oxide layer, the oxide layer is disposed on the external side of the metal layer constituted by a Group 11 element (that is, disposed closer to the surface of the protective layer).

Specifically, the oxide layers are depicted in FIG. 1, as follows:
(a) an oxide layer (the third protective layer 113) is disposed on the external side of the metal layer (the second protective layer 112) constituted by a Group 11 element;
(b) an oxide layer (the second protective layer 112) is disposed on the external side of the metal layer (the first protective layer 111) constituted by a Group 11 element; and
(c) an oxide layer (the third protective layer 113) is disposed on the external side of the metal layer (the first protective layer 111) constituted by a Group 11 element.

In cases where the metal layer of a Group 11 element is disposed as the first protective layer 111 as in (b) and (c), a structure including an oxide layer as the second protective layer 112 or the external third protective layer 113 or fourth or further protective layer conceivably decreases the degree to which the metal layer of a Group 11 element is oxidized.

### «Other requirements (layer thickness and porosity)»

The metal layer, with which the whole interconnector material 100 is desired to be coated, is accordingly desired to have some degree of layer thickness. On the other hand, a layer thickness larger than desired induces an increase in the electrical resistance. Taking these into consideration, the thickness of the metal layer is preferably 0.1 µm to 100 µm, more preferably 0.5 µm to 20 µm.

The oxide layer, with which the whole interconnector material 100 is desirably coated, is accordingly desired to have some degree of layer thickness. On the other hand, a layer thickness larger than desired induces an increase in the electrical resistance in some cases. Taking these into consideration, the thickness of the oxide layer is preferably 1 µm to 100 µm, more preferably 1 µm to 50 µm.

A metal layer having a low porosity exerts a high Cr-diffusion barrier effect, and hence, is preferable. The porosity of the metal layer is preferably 0 to 40%, more preferably 0 to 15%.

An oxide layer having a low porosity is hopefully expected to have a low electrical resistance. The porosity of the oxide layer is preferably 0 to 60%, more preferably 0 to 20%.

### <Cell stack>

A cell stack according to an embodiment of the present invention is characterized by including a structural unit in which a solid oxide electrochemical cell containing a fuel electrode, an electrolyte layer, and an air electrode is sandwiched between the protective-layer-coated-interconnectors.

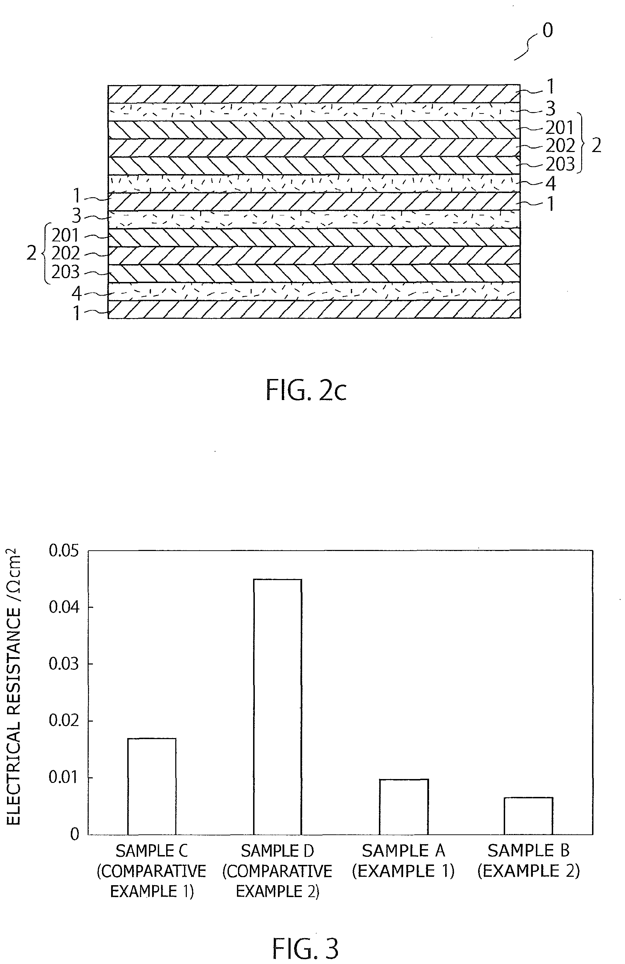

FIG. 2 includes schematic views each depicting part of a cross-sectional structure of a cell stack 0 according to an embodiment. In this regard, the schematic views are drawings depicting the positional relationship among the constituents, and, for example, the thickness ratios among the layers in the drawings do not necessarily conform to those among the actual layers.

The cell stack 0 has a stacked structure (FIG. 2b) in which a solid oxide electrochemical cell 2 containing a fuel electrode 201, an electrolyte layer 202, and an air electrode 203 is sandwiched between the protective-layer-coated-interconnectors (first interconnector or second interconnector) 1, forming a stack as one structural unit (FIG. 2a), which in general is repeatedly superposed in the direction in which the fuel electrode, the air electrode, and the like are stacked. Here, as shown in FIG. 2b, the "protective-layer-coated-interconnector 1 on the underside of the stacked structure" superposed thereon and the "protective-layer-coated-interconnector 1 on the upside of the stacked structure" disposed thereunder can be the interconnector shared between the "stacked structure" thereon and the "stacked structure" thereunder. That is, one protective-layer-coated-interconnector 1 can be used as the "protective-layer-coated-interconnector 1 on the underside of the stacked structure" thereon, and can be used as the
"protective-layer-coated-interconnector 1 on the upside of the stacked structure" thereunder.

In this regard, one such structural unit as depicted in FIG. 2a can singly achieve the function of the cell stack of a fuel cell, and as depicted in FIG. 2b, forming a stacked structure in which the structural unit is repeatedly superposed makes it possible to increase the amount of electrochemical reaction.

Examples of a cell stack according to an embodiment of the present invention are not limited to a cell stack that includes only a fuel electrode, an electrolyte layer, an air electrode, and a protective-layer-coated-interconnector, but encompass a cell stack including other constituent members, materials, and the like in addition to the enumerated constituent members (that is, a fuel electrode, an electrolyte layer, an air electrode, and a protective-layer-coated-interconnector). Specific preferable examples of the above-mentioned other constituent members include a fuel electrode current-collecting member, an air electrode current-collecting member, and the like. As depicted in FIG. 2c, specific preferable examples of a cell stack according to the present invention include: a cell stack in which a fuel electrode current-collecting member 3 is disposed between the protective-layer-coated-interconnector 1 and the fuel electrode 201; and a cell stack in which an air electrode current-collecting member 4 is disposed between the air electrode 203 and the protective-layer-coated-interconnector 1.

In the cell stack depicted in FIG. 2c, the fuel electrode current-collecting member 3 and the air electrode current-collecting member 4 function as the flow paths of fuel gas, air, generated gas (for example, water vapor), and the like, make it possible to more efficiently carry out the supply of fuel gas and air to the cell stack 0, the discharge of generated gas, heat, and the like out of the cell stack 0, and the like, enhance the electrical contact between the solid oxide electrochemical cell 2 and the protective-layer-coated-interconnector 1, and thus, contribute significantly to enhancement of the performance of the cell stack and the hydrogen energy system.

### <Hydrogen energy system>

A hydrogen energy system according to an embodiment of the present invention is characterized by including the cell stack.

Above, embodiments of the present invention have been described with reference to specific examples. The above-mentioned embodiments have each been described as one example of the present invention, and do not limit the present invention.

Additionally, in the description of each of the above-mentioned embodiments, the description of some portions and the like of the protective-layer-coated-interconnector, the cell stack, and the hydrogen energy system is omitted if such portions are not directly related in the description of the present invention, but, if desired, other constituents as such portions can be suitably selected and used.

Besides, all the interconnectors, cell stacks, and hydrogen energy systems the designs of which can be suitably changed by a person skilled in the art are encompassed in the scope of the present invention to the extent that such items include the constituents of the present invention, and do not depart from the spirit of the present invention. The scope of the present invention is defined by the scope of the claims and the equivalents thereof.

### EXAM PLES

### <Example 1>

On each of both faces of a stainless-steel-made sample piece, a Ag layer having a thickness of 1 µm was formed. Further on the layer, a Co layer having a thickness of 2 µm was formed. The resulting piece was exposed to a high-temperature atmosphere at a temperature of 700°C for 10 hours.

Then, the piece was cooled to room temperature through heat radiation. Thus, a sample A (Example 1) having a protective layer composed of a Ag metal layer and a Co oxide layer was produced on each face of the stainless steel.

On each of both faces of this sample A (Example 1), a Pt electrode was produced. The electrical resistance of this sample piece was measured at 700°C in accordance with a four-terminal method. The results are as seen in FIG. 3.

### <Example 2>

A sample B (Example 2) having a protective layer composed of a Ag metal layer and a Co oxide layer on each face of a stainless-steel piece was obtained in the same manner as in Example 1 except that a Ag layer having a thickness of 1 µm and a Co-Ni layer having a thickness of 4 µm, in place of a Ag layer having a thickness of 1 µm and a Co layer having a thickness of 2 µm, were formed on each face of a stainless-steel-made sample piece.

In the same manner as in Example 1, a Pt electrode was produced on each of both faces of this sample B. The electrical resistance of this sample was measured at 700°C in accordance with a four-terminal method. The results are as seen in FIG. 3.

### <Comparative Example 1>

A sample C (Comparative Example 1) having a Co oxide layer on each face of a stainless-steel piece was obtained in the same manner as in Example 1 except that a Co layer having a thickness of 2 µm, in place of a Ag layer having a thickness of 1 µm and a Co layer having a thickness of 2 µm, was formed on each face of a stainless-steel-made sample piece.

In the same manner as in Example 1, a Pt electrode was produced on each of both faces of this sample C. The electrical resistance of this sample was measured at 700°C in accordance with a four-terminal method. The results are as seen in FIG. 3.

### <Comparative Example 2>

A sample D (Comparative Example 2) having a Co-Ni oxide layer on each face of a stainless-steel piece was obtained in the same manner as in Example 1 except that a Co-Ni layer having a thickness of 4 µm, in place of a Ag layer having a thickness of 1 µm and a Co layer having a thickness of 2 µm, was formed on each face of a stainless-steel-made sample piece.

In the same manner as in Example 1, a Pt electrode was produced on each of both faces of this sample D. The electrical resistance of this sample was measured at 700°C in accordance with a four-terminal method. The results are as seen in FIG. 3.

### <Example 3>

On each of both faces of a stainless-steel-made sample piece, a Ag layer having a thickness of 1 µm was formed. Further on the layer, a Co-Ni layer having a thickness of 4 µm was formed. Thus, three samples were obtained.

The different samples were subjected to a high-temperature atmosphere exposure test at a temperature of 700°C for different retention times to obtain three samples ((Example 3-1), (Example 3-2), and (Example 3-3)) having a protective layer composed of a Ag metal layer and a Co oxide layer on each face of the stainless steel piece.

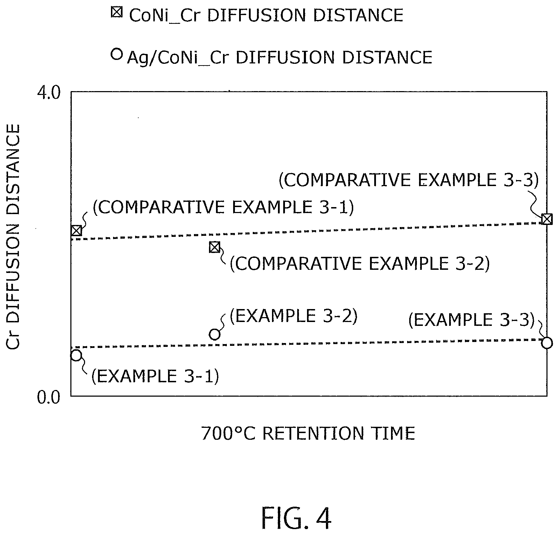

The cross-section of each sample underwent an SEM-EDS analysis, and an elemental analysis of the cross-section of the protective layer was performed in a line analysis mode. The Cr diffusion distance from each face of the stainless steel piece was examined. The results are as seen in FIG. 4.

### <Comparative Example 3>

On each of both faces of a stainless-steel-made sample piece, a Co-Ni layer having a thickness of 4 µm was formed. Thus, three samples (Comparative Example 3) were obtained.

The different samples were subjected to a high-temperature atmosphere exposure test at a temperature of 700°C for different retention times to obtain three samples ((Comparative Example 3-1), (Comparative Example 3-2), and (Comparative Example 3-3)) having a Co-Ni oxide layer on each face of the stainless steel piece.

The cross-section of each sample underwent an SEM-EDS analysis, and an elemental analysis of the cross-section of the oxide layer was performed in a line analysis mode. The Cr diffusion distance from each face of the stainless steel piece was examined. The results are as seen in FIG. 4.

### <Conclusion>

In Example 3 having a Ag metal layer, the Cr diffusion distance was significantly decreased, compared with Comparative Example 3 having no Ag metal layer. In addition, the Cr diffusion inhibition was retained at a sufficient level even though the heating retention time was longer. This has verified that the Ag metal layer functioned as the Cr diffusion barrier layer for a long time.

In addition, in Examples 1 and 2 having a Ag metal layer, the electrical resistance was superiorly decreased, compared with Comparative Examples 1 and 2 having no Ag metal layer. The electrical resistance of a Cr-based oxide is generally large, and thus, it is possible to infer that inhibiting the Cr diffusion decreased the generation rate of the Cr-based oxide. This is considered to be a factor that decreased the electrical resistance. The introduction of a Cr diffusion barrier layer made it possible to observe the Cr diffusion effect for a long time, hence making it possible to expect the effect of decreasing the electrical resistance over a long time.

The above-mentioned results have revealed that the introduction of a Ag layer allows the Ag layer to function as a Cr diffusion barrier layer for a long time, and to inhibit Cr from diffusing. In addition, the electrical resistance has been found to be decreased, and the long-time effect is expected. As understood from these results, the structure disclosed involves introducing a Ag layer to thereby achieve the inhibition of Cr diffusion, enable a decrease in the electrical resistance, and introduce a Cr diffusion barrier layer. The structure makes it possible to provide a cell stack and a hydrogen energy system that each have higher performance and higher durability.

### Reference Signs List

1: Protective-layer-coated-interconnector, 100: Interconnector material, 110: Protective layer, 0: Cell stack, 201: Fuel electrode, 202: Electrolyte layer, 203: Air electrode, 2: Solid oxide electrochemical cell, 3: Fuel electrode current-collecting member, 4: Air electrode current-collecting member

## Claims

1. A protective-layer-coated-interconnector comprising an interconnector material and a protective layer on the surface of the interconnector material,
wherein the protective layer contains a metal layer constituted by a Group 11 element.

2. The protective-layer-coated-interconnector according to claim 1, wherein the protective layer further contains an oxide layer, and the oxide layer is disposed on the external side.

3. The protective-layer-coated-interconnector according to claim 2, wherein the oxide layer contains at least one element selected from the group consisting of Mn, Fe, Co, Ni, Cu, Ce, and Zn.

4. The protective-layer-coated-interconnector according to claim 2 or 3, wherein the oxide layer has a thickness of 0.1 µm to 100 µm.

5. The protective-layer-coated-interconnector according to claim 2, 3 or 4, wherein the oxide layer has a porosity of 0 to 60%.

6. The protective-layer-coated-interconnector according to any one of the preceding claims, wherein the metal layer constituted by a Group 11 element has a thickness of 0.1 µm to 100 µm.

7. The protective-layer-coated-interconnector according to any one of the preceding claims, wherein the metal layer constituted by a Group 11 element has a porosity of 0 to 40%.

8. A cell stack comprising a structural unit in which a solid oxide electrochemical cell containing a fuel electrode, an electrolyte layer, and an air electrode is sandwiched between the protective-layer-coated-interconnectors according to any one of the preceding claims.

9. A hydrogen energy system comprising the cell stack according to claim 8.
